# EUROPÄISCHE PATENTSCHRIFT

(11) **EP 1 645 048 B1**
(45) Veröffentlichungstag und Bekanntmachung des Hinweises auf die Patenterteilung: **17.10.2018**
(21) Anmeldenummer: 04740907.3
(22) Anmeldetag: 11.07.2004
(51) Int. Cl.: H04B 3/56

(54) **INDUKTIVE KOPPELSCHALTUNG UND VERFAHREN ZUR NACHRICHTENÜBERTRAGUNG ÜBER GESCHIRMTE ENERGIEKABEL EINES ELEKTRISCHEN ENERGIEVERTEILNETZES**
INDUCTIVE COUPLING CIRCUIT AND TELECOMMUNICATION METHOD BY SHEATHED CABLES OF AN ELECTRICAL CURRENT DISTRIBUTION NETWORK
CIRCUIT DE COUPLAGE INDUCTIF ET PROCEDE DE TELECOMMUNICATION PAR DES CABLES BLINDES D'UN RESEAU ELECTRIQUE DE DISTRIBUTION DE COURANT

(30) Priorität: 11.07.2003 DE 10331744
(43) Veröffentlichungstag der Anmeldung: 12.04.2006
(73) Patentinhaber: iAd Gesellschaft für Informatik, Automatisierung und Datenverarbeitung mbH, 90613 Grosshabersdorf (DE)
(72) Erfinder: BUMILLER, Gerd, 90768 Fürth/Vach (DE)
(74) Vertreter: Dreykorn-Lindner, Werner
(86) Internationale Anmeldenummer: PCT/EP2004/007646
(87) Internationale Veröffentlichungsnummer: WO 2005/008913

(56) Entgegenhaltungen:
- EP-A2- 1 566 049
- DD-A- 156 660
- DE-U- 9 315 875
- DE-U- 9 315 875
- US-A1- 2001 052 843

## Beschreibung

Die Erfindung betrifft in erster Linie eine induktive Ankoppelschaltung (Patentansprüche 1 und 2). Weiterhin betrifft die Erfindung ein Verfahren zur Nachrichtenübertragung in elektrischen Energieverteilnetzen (Patentansprüche 7 und 8).

Die Schaffung neuartiger schneller Festnetzzugänge für die Telekommunikation im Ortsnetzbereich - auch Local Loop oder Last Mile genannt - ist derzeit Gegenstand intensiver Entwicklungsarbeiten. Nach der Aufhebung der Fernmeldemonopole hat auf breiter Front ein intensiver Wettbewerb eingesetzt, der jedoch im Ortsnetzbereich bislang kaum zur Wirkung kam. Der Hauptgrund hierfür ist, dass die ehemaligen Monopolisten hier nach wie vor die Eigentümer der Leitungsnetze sind. Alternativen in Form von Mikrowellen-Funknetzen oder Kabel-TV-Netzen sind zurzeit in Entwicklung. Sie können jedoch aufgrund hoher Kosten in absehbarer Zeit keine flächendeckenden Alternativen zu bestehenden TK-Netzen bieten. Elektrische Energieverteilnetze hingegen haben - wie zahlreiche Studien und Feldversuche ergaben - durchaus dieses Potential. Sie sind flächendeckend und weitaus feiner verzweigt als jedes bestehende TK-Netz, denn sie erreichen nicht nur jedes Haus, sondern unmittelbar jeden Verbraucher elektrischer Energie und jede Steckdose.

Aufgrund dieser hervorragenden Perspektiven hat sich unter dem Begriff "PowerLine Communications (PLC)" ein neuer Industriezweig gebildet, der die technische Umsetzung der neuen Möglichkeiten und die Bereitstellung der damit verbundenen Dienstleistungen zum Ziel hat. PowerLine Communication - Systeme sind Nachrichtenübertragungssysteme, die Information über das Medium Energiekabel verteilen. Insbesondere ist hierbei die Übertragungsstrecke zwischen Trafostation im Niederspannungsnetz und Kundenanlage im Haus von Bedeutung. Die Topologie dieses Netzabschnittes besitzt meist eine Punkt-zu-Multipunkt-Struktur mit der Trafostation als Knotenpunkt. An diesem Knotenpunkt kann beispielsweise eine Sende-Empfangseinheit angeordnet werden, die hochfrequente Signale bis 30 MHz separat in die abgehenden Kabel einspeist und dem 50Hz Energiestrom überlagert. Weitere Sende-Empfangseinheiten können sich bei der Kundenanlage an der Schnittstelle zwischen Niederspannungsverteilnetz der Energieversorger und Hausinstallationsnetz der Kundenanlage befinden. Hier werden ebenfalls hochfrequente Signale in das Energiekabel eingespeist und empfangen. Die Überlagerung des 50Hz-Energiestromes mit hochfrequenten Datensignalströmen bringt grundsätzlich Probleme der elektromagnetischen Verträglichkeit mit sich.

Wie umfangreiche Untersuchungen ergeben haben, können unterschiedliche EMV-Maßnahmen vorgesehen werden, welche die Störbeeinflussung durch leitungsgebundene und gestrahlte Störgrößen reduzieren. Beispielsweise kann die Reduzierung der leitungsgebundenen Störbeeinflussung durch Entkoppelfilter erfolgen, wobei möglichst alle parasitären leitungsgebundenen Ausbreitungswege des HF-Signals unterdrückt werden. Die Entkoppelfilter werden jeweils an den Enden der Übertragungsstrecke an Trafostation und Hausanschluss eingesetzt.

An der Trafostation verhindern die Filter eine Ausbreitung des HF-Signals auf die Sammelschiene und in die parallel liegenden Abzweige. Somit wird zum einen die HF-Emission an der Sammelschiene reduziert, da die Störspannungspegel auf der Sammelschiene vermindert werden. Zum anderen wird die leitungsgebundene Überlagerung des HF-Signals parallel liegender Abzweige verhindert, wodurch auf parallel liegenden Abzweigen gleiche Frequenzen verwendet werden können.

Am Hausanschluss hat das Entkoppelfilter ebenfalls die Aufgabe, eine Barriere für HF-Signale zu bilden. Die Entkoppelfilter verhindern ein unerwünschtes Eindringen des HF-Signals in das Hausinstallationsnetz der Kundenanlage und bewirken somit eine Separierung von Energieversorgung und hochfrequenten Signalen. Für die Strecke zwischen Trafostation und Hausanschluss in den Niederspannungsverteilnetzen wird von den EVU praktisch generell ein Hauptspeisekabel in 4-Leitertechnik eingesetzt. Das bedeutet, dass der N-Leiter (Rückstromleiter des Betriebsstromkreises) und der PE-Leiter (Protective Earth) in einem Leiter, dem PEN-Leiter vereint sind. Diese Form der Netzausführung nennt man TN-C-Netz (Terre-Neutre-Combiné) im Gegensatz zum TN-S-Netz (Terre-Neutre-Separé), wo PE- und N-Leiter getrennt geführt werden und nur an einer einzigen Stelle miteinander verbunden sind. Sowohl Trafostation als auch Hausanschluss sind im TN-C-Netz geerdet. Somit bietet sich dem Verbraucherrückstrom zur Trafostation nicht nur der Weg über den N-Leiter, sondern auch der Weg über das Erdreich.

Dasselbe gilt natürlich auch für das hochfrequente Nutzsignal der Datenübertragung. Durch diese räumliche Trennung von Hin- und Rückleiter werden hohe Magnetfelder erzeugt, die benachbarte Stromkreise induktiv beeinflussen und damit Störspannungen induzieren. Ebenso können sich Störspannungen von äußeren, Quellen der Betriebsspannung und der Datensignalspannung überlagern. Neben der Induktion durch äußere Magnetfelder treibt eine durch unterschiedliche Erdpotentiale hervorgerufene Gleichtaktspannung einen Gleichtaktstrom durch die Versorgungs- bzw. Datenleitungen. Dieser Gleichtaktstrom bewirkt einen Spannungsabfall an den Impedanzen der Leitung und des Verbrauchers und ist somit eine weitere Störgröße.

Die einphasige Ankopplung bei der Datenübertragung mit Hilfe eines Koppelkondensators (galvanische Trennung vom Stromnetz und Ausfilterung niederfrequenter Störsignale) und zugehörigem Entladewiderstand ist z.B. aus der EP 0 684 681 A1 bekannt. In Verbindung mit einem HF-Übertrager bewirkt diese physikalische Netzanbindung eine galvanische Trennung vom Stromnetz, die Ausfilterung niederfrequenter Störsignale durch Hochpasswirkung und die Anpassung der Netzimpedanz an die Eingangsimpedanz einer nachfolgenden Elektronikeinrichtung mit mehrstufiger Filterung (passive Bandpassfilter) und geregelter Verstärkung (Regelkreis mit Hüllkurvendetektor, PI-Regler, Proportionalglied und nichtinvertierenden Wechselspannungsverstärker). Weiterhin kann in der Ankoppelung parallel zur Sekundärwicklung des HF-Übertragers eine Supressordiode geschaltet sein, welche die netzseitigen Hochspannungsspitzen unterdrückt.

Weiterhin ist aus der DE 197 54 800 A1 eine Buskoppeleinrichtung bekannt, bei der die auf das Netz aufgeprägte Sendespannung unabhängig von der Phasenlage der Netzimpedanz (und weitgehend auch unabhängig vom Betrag der Netzimpedanz) ist, bei der die galvanische Isolation und die Empfangsempfindlichkeit der Buskoppeleinrichtung und der daran angeschlossenen Geräte unbeeinflusst bleibt und bei der eine verbesserte Unterdrückung von Störsignalen außerhalb des Nutzfrequenzbandes der HF-Signale erreicht wird. Im einzelnen ist in der Buskoppeleinrichtung für ein Installationsbussystem mit Stromversorgungsnetz-gebundener Informationsübertragung ein Einkoppelkreis mit einem HF-Überträger vorhanden, zu dessen Primärwicklung zumindest ein Entkopplungskondensator und eine Kompensationsinduktivität in Serie geschaltet sind, und diese Serienschaltung ist mit einem Niederspannungsnetz verbindbar. Die Induktivität ist so ausgelegt, dass ihre Impedanz bei der Frequenz eines einzigen verwendeten HF-Trägersignals, oder eines Mittelwerts der Frequenzen der HF-Trägersignale im Fall der Verwendung mehrerer HF-Trägersignale, die Impedanz des Entkopplungskondensators durch eine Serienresonanz kompensiert, wobei die Induktivität auch unter Berücksichtigung von Streuinduktivitäten des HF-Übertragers ausgelegt ist. Weiterhin kann in die Serienschaltung von Entkopplungskondensator, Induktivität und Primärwicklung ein Sicherungswiderstand eingefügt werden. Schließlich ist für den Fall, dass auf der Sekundärseite des Übertragers ein Sendeverstärker angeschlossen ist, der einen Auskoppelkondensator enthält, oder der über einen solchen gleichspannungsfrei angeschlossen ist, zusätzlich eine sekundärseitige Kompensation mittels einer sekundärseitigen Induktivität durchgeführt. Dabei ist diese sekundärseitige Induktivität in Reihe mit der Sekundärwicklung des Übertragers geschaltet, und kompensiert die Impedanz des Auskoppelkondensators bei der Frequenz des HF-Trägersignals oder des Mittelwerts von HF-Trägersignal-Frequenzen. Durch diese Art der Vorkompensation arbeitet das System in stark induktiven Netzen genauso sicher und erzielt ähnliche Reichweiten, wie in schwach induktiven oder auch kapazitiven Netzen.

Weiterhin ist aus der DE 199 07 095 C1 eine Ankoppelschaltung für eine Datenübertragungseinrichtung an eine Phase eines elektrischen Energieübertragungsnetzes bekannt, welche eine Reihenschaltung aus einem Koppelkondensator und einem ersten Überspannungsableiter aufweist, die zwischen der Phase und einem Bezugspotential des elektrischen Energieübertragungsnetzes angeordnet ist, und eine Ableitspule aufweist, die parallel zum ersten Überspannungsableiter angeschaltet ist und woran eine Datenübertragungseinrichtung ankoppelbar ist. Um eine Ankoppelschaltung und eine diese enthaltende Koppeleinheit anzugeben, welche sich bei Auftritt eines internen Fehlers selbst vom Mittelspannungsnetz möglichst so abkoppelt, dass dessen Betrieb nicht beeinträchtigt wird, ist im einzelnen vorgesehen, dass eine Feinsicherung in der Reihenschaltung an der Phase angeordnet ist und derartige elektrische Kennwerte aufweist, dass diese weder von einem Strom der Datenübertragungseinrichtung noch von Überspannungen des elektrischen Energieübertragungsnetzes ausgelöst wird. Die elektrischen Kennwerte der Feinsicherung und des ersten Überspannungsabieiters sind dabei so abgestimmt, dass im Falle einer Durchlegierung des Koppelkondensators die Feinsicherung bereits von einem anklingenden Kurzschlussstrom durch den Überspannungsableiter schnell und sicher ausgelöst wird. Die Koppeleinheit weist isolierenden Werkstoff auf, der die Ankoppelschaltung gehäuseartig, insbesondere in einer mit einem Stützisölator vergleichbaren Form, so umschließt, dass ein erster Anschluss der Reihenschaltung an eine Phase des elektrischen Energieübertragungsnetzes, ein zweiter Anschluss der Reihenschaltung an das Bezugspotential und ein dritter Anschluss der Ableitspule an eine Datenübertragungseinrichtung von außen zugänglich sind.

Weiterhin ist beispielsweise aus Proceedings of International Symposium on Powerline Communication and its Application 2000 die Datenübertragung auf Energieleitungen, sowohl auf Nieder- wie Mittelspannung, mit Hilfe einer kapazitiven Einkopplung bekannt. Die erreichten Reichweiten gehen über etliche Trafostationen und teilweise über mehr als 10 km. Nachteil dieser Einkopplung ist die direkte Verbindung mit dem Leiter, der daraus notwendigen Spannungsfestigkeit, der Platzbedarf zur Installation und die Notwendigkeit bei der Installation die Anlage spannungsfrei zu schalten. Bei sehr kompakten Trafostationen, die mit Erdkabel versorgt werden, meistens neue, ist die Installation einer kapazitiven Einkopplung teilweise nicht möglich.

Weiterhin sind beispielsweise aus dem Gerätehandbuch DCS3000 der Fa. Siemens AG Ausgabe A1.0/02.2002 Seiten 1-63 bis 1-65 bzw. dem zugehörigen DE 93 15 875 U neben der kapazitiven Ein-/Auskopplung auch induktive Ein-/Auskopplungen auf dem Mittelspannungsnetz bekannt, die einfach über das Kabel installiert werden. Die induktive Ankoppeleinheit besteht aus einem 2-teiligen Ferrit-Ringkern mit Montageschelle, welcher um das für die Datenübertragung vorgesehne Energiekabel gelegt wird. Die Ankopplung an die Sende-/Empfangsstation erfolgt durch sechs Windungen eines Leiters, die um den Ferrit-Ringkern gelegt werden. Dies bedarf wenig Platz und kann während des Betriebes der Anlage erfolgen, wobei sowohl bei kapazitiver als auch induktiver Kopplung als Rückleitung für das Datensignal die Erde dient. Eine induktive Einkopplung beruht auf dem Prinzip, dass mit Hilfe dieser Einkoppelung ein ringförmiges Magnetfeld erzeugt wird. Innerhalb dieses Ringes ist somit eine Fläche aufgespannt. Durchbricht ein Leiter diese Fläche, wird in diesen Leiter ein Strom induziert. Kann dieser Strom nicht frei fließen, erzeugt dieser eine Spannung, die wiederum einen Stromfluss in entgegengesetzter Richtung bewirkt und den induzierten Strom kompensiert. Bei der Auskopplung wird der Effekt genutzt, dass ein Stromfluss in einem Leiter ein ringförmiges Magnetfeld erzeugt, das von der Auskopplung erfasst und bewertet werden kann. Da sowohl die Einkopplung wie auch die Auskopplung mit der gleichen Vorrichtung erfolgen kann, werden sie als eine Einheit betrachtet und als Ein- / Auskopplung bezeichnet. Dadurch, dass diese Einkopplung über Schirm und Leiter erfolgt und der Schirm aus Gründen der Sicherheit auf beiden Seiten geerdet ist, induziert sich der Strom in den Schirm. Die Übertragung ist, wenn der Schirm zwischendurch nicht in einer Erdmuffe oder einem Bleimantel eines älteren Kabels geerdet ist, somit nur zwischen zwei benachbarten Trafostationen möglich, ansonsten gar nicht. Gegenüber einem Übertragungssystem mit kapazitiver Einkopplung sind deutlich mehr Sende- / Empfangseinrichtungen notwendig und die Laufzeiten einer Nachricht steigen deutlich an. Funktioniert eine Sende- / Empfangseinrichtung nicht, ist der Kommunikationsweg unterbrochen. Dies macht manche Anwendung, die bezüglich ihrer Echtzeitfähigkeit oder Sicherheitsanforderungen kritisch sind, unmöglich.

Eine ähnliche induktive Ankoppeleinheit mit mindestens einer Induktionsspule, welche um das für die Datenübertragung vorgesehene Energiekabel (Mittelspannung) gelegt wird, ist aus der WO 03/036932 bekannt. Um das Energiekabel für die Montage nicht unterbrechen zu müssen, kann beispielsweise eine zweiteilige Induktionsspule oder eine Induktionsspule mit einem geschlitzten flexiblen Ringkern benutzt werden. Die Ankopplung an eine, nach der Trafostation angeordnete und auf Niederspannung liegenden Sende-/Empfangsstation und deren Energieversorgung, kann von der Ankoppeleinheit aus auch drahtlos erfolgen, beispielsweise durch Infrarotübertragung, so dass im Gehäuse der Ankoppeleinheit sowohl ein Infrarot-Sender als auch ein Infrarot-Empfänger angeordnet sind (auch mit zwei Induktionspulen). Alternativ ist die Stromversorgung auch mittels Solarzellen und Akkumulator beschrieben.

Weiterhin ist aus der WO 02/054605 eine induktive Ankoppeleinheit mit einem HF-Übertrager bekann, wobei das Energiekabel aufgetrennt und der HF-Übertrager in mindestens einen von mehreren Nullleitern derart eingeschleift ist, dass die Primärseite zwischen Nullleiter und Erdpotential liegt. Die Sekundärseite des Übertragers ist an eine Datenübertragungseinrichtung, beispielsweise ein Modem, angeschlossen, wobei die anderen Nulleiter zur Übertragung in Rückrichtung dienen.

In Weiterentwicklung hierzu ist aus der WO 02/080396 eine induktive Ankoppeleinheit bekannt, bei der ein zweiteiliger Magnetkern benutzt wird, welcher derart um das Energiekabel gelegt wird, dass die Sekundärwicklung um den Kern gewickelt ist und ein Teil der durch den Kern verlaufenden Energieleitung als Primärwicklung dient. Schließlich kann vorgesehen werden, dass auf der Sekundärseite des Übertragers ein Auskoppelkondensator angeordnet ist.

Wie die vorstehende Würdigung des Standes der Technik aufzeigt, sind unterschiedlich ausgestaltete induktive Ankoppeleinheiten bekannt, welche meist einen Übertrager enthalten. Eine Installation im Betrieb einer 10 / 20 kV Energieleitung ist nur möglich, wenn kein Eingriff im Sicherheitsbereich, der meist durch konstruktive Maßnahmen zusätzlich geschützt ist, notwendig wird. Somit scheidet sowohl eine kapazitive Ein- / Auskopplung wie auch die Installation einer induktiven Ein- / Auskopplung direkt über einen Leiter aus.

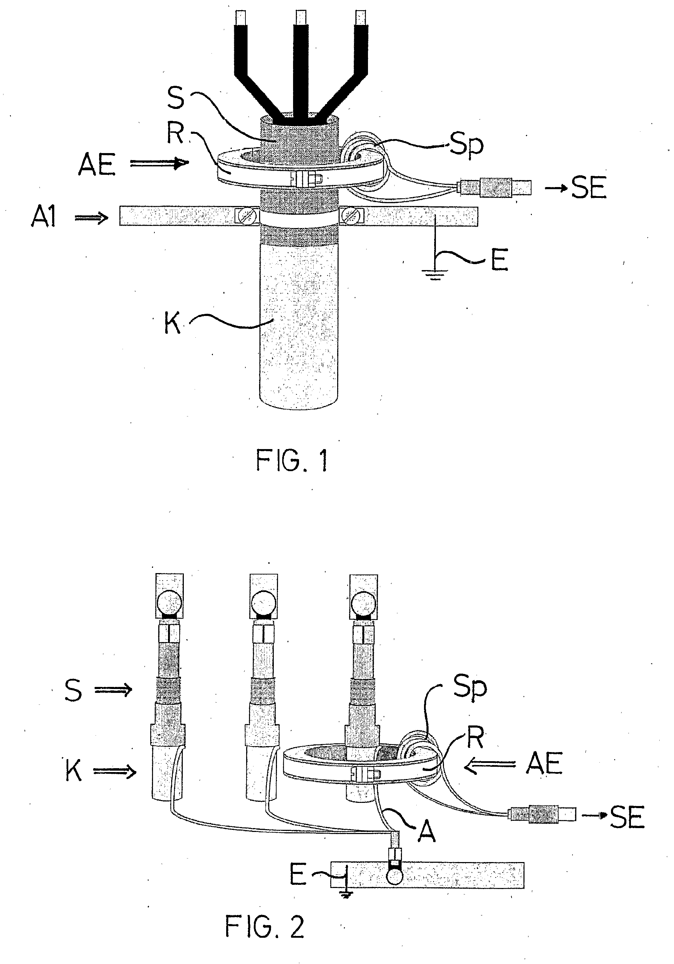

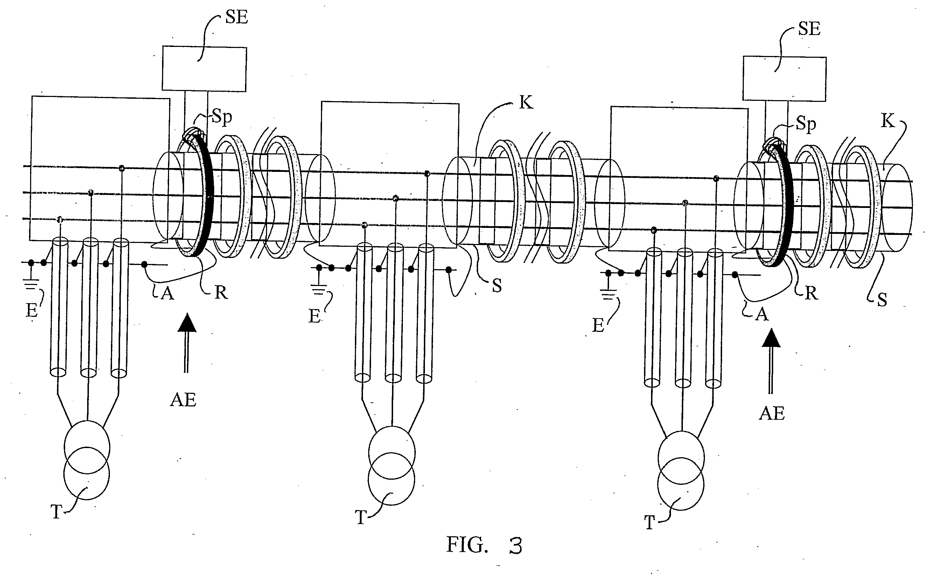

Schirme von Erdkabeln zwischen zwei Trafostationen sind aus Gründen der Sicherheit auf beiden Seiten mit Erde oder einem Ausgleichspotential verbunden. Teilweise ist für jede Phase (drei Phasen) ein eigenes Kabel mit eigenem Schirm verlegt, teilweise werden die drei Phasen auch in einem Kabel zusammengefasst und von einem gemeinsamen Schirm umgeben, (wie in FIG. 1 bzw. FIG. 3 dargestellt). Entsprechend physikalischer Gesetzmäßigkeit sucht sich der Strom den Weg des geringsten Widerstandes. Führt nun durch die von der induktiven Einkopplung aufgespannte Fläche ein Stromkreis mit einem niedrigen Widerstand und ein zweiter Stromkreis mit einem höheren Widerstand; so wird der Großteil des Stromes in den Stromkreis mit den niedrigeren Widerstand induziert.

Bei der bisherigen Installation von induktiven Einkopplungen ist der Stromkreis mit dem sehr niedrigen Widerstand der Schirm, der auf beiden Seiten geerdet ist. Somit wird der Strom in den Schirm induziert. Ist nun der Schirm zwischen benachbarten Trafostationen geerdet, wie z.B. in einer Erdmuffe oder das Kabel hat einen Bitumen isolierten Bleimantel, der Kontakt zum Grundwasser hat, so wird der Stromkreis vorzeitig geschlossen und erreicht nicht die benachbarte Trafostation. Elektromagnetische Störungen im Umfeld werden von den Schirmen der Kabel aufgefangen und als Ausgleichsstrom nach Erde abgeleitet. Diese Ausgleichsströme haben eine für die Übertragung durchaus relevante Größenordnung und werden als Störsignal bei der Auskopplung erfasst. Auf dem Leiter selbst sind diese Ausgleichsströme nicht vorhanden.

Weiterhin ist aus der nicht vorveröffentlichten WO 2004/049675 A2 ein induktiver Koppler für ein Koaxial-Stromkabel mit einem Mittelleiter, welches einen Signalstrom führt, und mit einer konzentrische Abschirmung (oder Ummantelung), welche als eine Rückleitung dient, die einen Strom von ähnlicher Größe, jedoch entgegengesetzter Phase zu dem Signalstrom führt, bekannt. Weiterhin ist ein Ableiter, insbesondere ein Ableitdraht, vorgesehen, welcher die Abschirmung mit der Masse verbindet. Durch das Zurückführen des Ableiters durch den Koppler wird der Strom in der Abschirmung zweimal durch den Kopplerkern geleitet, einmal in der Abschirmung in einer direkten und einmal durch den Ableiter in der entgegengesetzten Richtung und hebt im Wesentlichen die Wirkung des Abschirmstroms auf. Idealerweise ist die Größe des Signalstroms I₁ im Mittelleiter gleich der des Signalstroms I₂ in der Abschirmung, die wiederum gleich der Größe des Signalstroms I₃ im Ableiter ist.

Demgemäß fehlt in der Praxis eine induktive Ankoppeleinheit, bei welcher der Strom direkt in den Leiter induziert und bei welcher bei der Auskopplung die Ausgleichsströme auf dem Schirm nicht mit erfasst werden. Besonders bedeutsam ist dies, weil die Mittel- oder Hochspannungsanlagen herstellende Industrie als äußerst fortschrittliche, entwicklungsfreudige Industrie anzusehen ist, die sehr schnell Verbesserungen und Vereinfachungen aufgreift und in die Tat umsetzt.

Der Erfindung liegt gegenüber den bekannten induktiven Ankoppeleinheiten bzw. Verfahren zur Nachrichtenübertragung in elektrischen Energieverteilnetzen mit geschirmten Energiekabeln die Aufgabe zugrunde, eine solche induktive Ankoppeleinheit und ein Verfahren zur Verfügung zu stellen, mit welcher die Reichweiten der kapazitiven Ein- / Auskopplung erreicht werden können.

Diese Aufgabe wird, nach Patentanspruch 1, von einer induktiven Koppelschaltung zur Nachrichtenübertragung in elektrischen Energieverteilnetzen, welche in der Übertragungsstrecke angeordnet ist und welche eine induktive Koppeleinheit, bestehend aus einem das geschirmte Energiekabel umschließenden Ring und einer mit dem Ring induktiv gekoppelten Spule, welche mit einer Sende-/Empfangseinrichtung verbunden ist, und einen mit dem Schirm und Erde oder Ausgleichspotential verbundenen Ableiter aufweist, dadurch gelöst, dass der Ableiter der induktiven Koppeleinheit nachgeordnet ist und dass die Koppelschaltung am Ende des Energiekabels angebracht ist, wobei die induktive Koppeleinheit näher am Kabelende angeordnet ist als der Ableiter, wodurch der Strom des überlagerten Nachrichtensignals im Leiter des Energiekabels fließt und wodurch im Schirm kein Stromfluss resultiert.

Weiterhin wird diese Aufgabe, nach Patentanspruch 2, von einer induktiven Koppelschaltung zur Nachrichtenübertragung in elektrischen Energieverteilnetzen, welche in der Übertragungsstrecke angeordnet ist, welche eine induktive Koppeleinheit, bestehend aus einem das geschirmte Energiekabel umschließenden Ring und einer mit dem Ring induktiv gekoppelten Spule, welche mit einer Sende-/Empfangeinrichtung verbunden ist und welche einen mit dem Schirm und Erde oder Ausgleichspotential verbundenen Ableiter, dessen Leitungsweg durch den Ringkern zurückgeführt ist, aufweist, wobei dieinduktive Koppeleinheit beim Senden den Strom des Nachrichtensignals direkt in den Leiter induziert und beim Empfangen nur den Strom im Leiter auswertet, dadurch gelöst, dass die induktive Koppeleinheit in einer Trafostation angeordnet ist, dass der Ring als Ringkern oder als Kunststoffring mit umwickelter Spule ausgestaltet ist, dass die induktive Koppeleinheit über alle Phasen eingeschleift ist und dass der Leitungsweg so durch den Ringkern zurückgeführt ist, dass beim Durchqueren des Ringkerns der Strom durch den Schirm in entgegengesetzter Richtung zu dem Strom im Leitungsweg des Ableiters fließt.

Weiterhin wird diese Aufgabe, ausgehend von einem Verfahren zur Nachrichtenübertragung in elektrischen Energieverteilnetzen mit geschirmten Energiekabeln und mit einer daran angeordneten induktiven Koppelschaltung, bestehend aus einem das geschirmte Energiekabel umschließenden Ring und einer mit dem Ring induktiv gekoppelten Spule, welche mit einer Sende-/Empfangseinrichtung verbunden ist, und mit einem mit dem Schirm und Erde oder Ausgleichspotential verbundenen Ableiter, nach Patentanspruch 7 dadurch gelöst, dass der Ableiter der induktiven Koppeleinheit nachgeordnet ist, indem die Koppelschaltung am Ende des Energiekabels angebracht ist und die induktive Koppeleinheit näher am Kabelende angeordnet ist als der Ableiter und dass die induktive Ein- und Auskopplung des Nachrichtensignals durch die von der induktiven Koppeleinheit aufgespannten Fläche derart erfolgt,
dass im Schirm kein Stromfluss resultiert, so dass von der einen Seite der für die induktive Einkopplung aufgespannten Fläche keine leitende Verbindung zu der anderen Seite besteht, als die durch die Fläche selbst und beim Senden der Strom des Nachrichtensignals direkt in den Leiter induziert und beim Empfangen nur der Strom im Leiter ausgewertet wird.

Schließlich wird diese Aufgabe, ausgehend von einem Verfahren zur Nachrichtenübertragung in elektrischen Energieverteilnetzen mit geschirmten Energiekabeln und mit einer daran angeordneten induktiven Koppelschaltung, mit einer induktiven Koppeleinheit, bestehend aus einem das geschirmte Energiekabel umschließenden Ring und einer mit dem Ring induktiv gekoppelten Spule, welche mit einer Sende-/Empfangseinrichtung verbunden ist und mit einem mit dem Schirm und Erde oder Ausgleichspotential verbundenen Ableiter, dessen Leitungsweg durch den Ringkern zurückgeführt ist, nach Patentanspruch 8 dadurch gelöst, dass die induktive Ein- und Auskopplung des Nachrichtensignals mittels der in einer Trafostation angeordneten induktiven Koppeleinheit, welche näher am Kabelende angeordnet ist als der Ableiter, über alle Phasen derart erfolgt, dass durch die von der induktiven Koppeleinheit der Koppelschaltung aufgespannten Fläche, das überlagerte Nutzsignal in den Leitern des Energiekabels, der Gegenstrom und/oder induzierte Störungen auf dem Schirm und der identische Gegenstrom und und/oder induzierte Störungen in entgegengesetzter Richtung fließen, wobei der Leitungsweg so durch den Ringkern oder durch einen Kunststoffring mit umwickelter Spule zurückgeführt ist, dass beim Durchqueren des Ringkerns oder des Kunststoffrings der Strom durch den Schirm in entgegengesetzter Richtung zu dem Strom im Leitungsweg des Ableiters fließt, wodurch sich das Magnetfeld der beiden zuletzt genannten
Ströme kompensiert und die induktive Koppeleinheit beim Senden den Strom des Nachrichtensignals direkt in die Leiter induziert und beim Empfangen nur den Strom in den Leitern auswertet.

Bei den erfindungsgemäßen induktiven Koppelschaltungen nach Patentanspruch 1 oder 2 bzw. erfindungsgemäßen Verfahren nach Patentanspruch 7 oder 8 wird eine Installation der induktiven Einkopplung am Kabel über Schirm und Leiter vorgenommen. Der Schirm einer Energieleitung wird am Endpunkt mit Hilfe eines leitenden Materials, z.B. eines metallischen Gewebebandes, mit der in der Trafostation vorhandenen Erde oder Ausgleichspotential verbunden. Der Strom im Schirm fließt somit über dieses leitende Material, genannt Ableiter, nach Erde ab. Somit ist der Strom im Ableiter und im Schirm fast identisch (identisch, wenn Ableiter aufhört).

Bei der Ausgestaltung nach Patentanspruch 2 bzw. nach Patentanspruch 8 wird der Ableiter durch die von der induktiven Einkopplung aufgespannte Fläche zurückgeführt. Das ringförmige, magnetische Feld induziert nun einen Strom sowohl in den Schirm als auch in den Ableiter. Da dieser Strom durch die Fläche des ringförmigen, magnetischen Feldes in gleicher Richtung fließt, ist die Stromrichtung bezüglich des Leiters entgegengesetzt. Die entgegengesetzten Ströme kompensieren sich, so dass tatsächlich fast kein Stromfluss im Schirm resultiert. Da nun im Schirm kein Strom fließt, wird dieser in den Leiter induziert.

Dies gilt auch, wenn der Ableiter nach dem Durchqueren der Fläche für die induktive Einkopplung eine leitfähige Verbindung zum Schirm hat. Verallgemeinert kann gesagt werden, dass im Schirm kein Stromfluss resultiert, wenn von der einen Seite der für die induktive Einkopplung aufgespannten Fläche keine leitende Verbindung zu der anderen Seite besteht, als die durch die Fläche selbst. Weiterhin gilt dies auch für die Ausgestaltung nach Patentanspruch 1 bzw. nach Patentanspruch 7, bei welcher der Ableiter vor der Fläche für die induktive Ankopplung angeordnet ist und vom Schirm weggeführt wird.

Die erfindungsgemäßen induktiven Koppelschaltungen nach Patentanspruch 1 oder 2 bzw. erfindungsgemäßen Verfahren nach Patentanspruch 7 oder 8 weisen den Vorteil auf, dass durch die Einkopplung des Stroms in den Leiter, die Übertragung von Daten nicht mehr auf die Strecke zwischen benachbarten Trafostationen begrenzt ist. Da ein Transformator meist eine relativ hochohmige Last darstellt, verbleibt der größte Teil des Stromes in der weiterführenden Leitung. Somit kann eine Vielzahl von Trafostationen überbrückt werden, ohne dass eine Sende- / Empfangseinrichtung (zu Wiederholungszwecken) in diesen eingebaut wird.

Neben der Einsparung der Kosten für diese Sende- / Empfangseinrichtungen können dieselben Nachrichten im Netzwerk durch die nicht mehr notwendigen Wiederholungen deutlich schneller übermittelt werden und das System ist somit in der Lage bezüglich der Echtzeit kritischen Funktionen zu realisieren. Da nun mehrere Sende- / Empfangseinrichtungen dieselbe Nachricht empfangen können, ist es möglich, ein redundantes Kommunikationsnetz aufzubauen, bei dem auch bei Ausfall einer Station oder bis zu einer definierten Anzahl von Stationen die Übertragung im Netz sichergestellt bleibt. Diese Anforderung ist wichtig für sicherheitsrelevante Funktionen, die über ein solches System abgewickelt werden sollen.

Bei der Auskopplung müssen nun der Strom im Leiter, der das Nutzsignal trägt, von dem Strom im Schirm, der durch die Schirmwirkung einen Gegenstrom und Störungen enthält, getrennt werden. Die Aufgabe eines Schirmes bei einem Kabel ist es, das elektromagnetische Feld außerhalb des Kabels zu reduzieren. Um dies erreichen zu können, fließt in einem Schirm, der beidseitig niederohmig angeschlossen ist, ein entgegengesetzt gerichteter Strom, so dass sich das resultierende Magnetfeld außerhalb des Kabels kompensiert. Umgekehrt induziert ein elektromagnetisches Feld einer Störquelle nur einen Strom in den Schirm, wodurch innerhalb des Kabels das vom Störer verursachte Feld weitgehend kompensiert wird. Somit bleibt der Leiter im Kabel von der Störung unbeeinflusst und eignet sich hervorragend für die Übertragung von Daten.

Da die induktive Auskopplung nur über Schirm und Leiter angebracht werden kann, sieht diese auch nur die Überlagerung vom Nutzsignal im Leiter, dem Gegenstrom zum Nutzsignal im Schirm und den eingekoppelten Störungen im Schirm. Erfindungsgemäß wird der Ableiter des Schirmes durch die von der induktiven Einkopplung aufgespannte Fläche zurückgeführt. Nun fließen durch die von der induktiven Einkopplung aufgespannten Fläche drei Ströme. Als erstes das Nutzsignal in dem Leiter, als zweites der Gegenstrom und die induzierten Störungen auf dem Schirm und als drittes der identische Gegenstrom und induzierten Störungen in entgegengesetzter Richtung. Hierdurch kompensiert sich das Magnetfeld der beiden letzten Ströme und die induktive Auskopplung wertet nur den Strom im Leiter aus.

Wie bereits ausgeführt wird kein Stromfluss im Schirm ausgewertet, wenn von der einen Seite der für die induktiven Einkopplung aufgespannten Fläche keine leitende Verbindung zu der anderen Seite besteht, als die durch die Fläche selbst. Durch diese Art der Auskopplung kann nun ausschließlich der Strom im Leiter des Kabels erfasst werden. Da der Schirm den Leiter im Kabel von der Einkopplung von Störungen schützt, sind die verbleibenden Störungen gering. Es ergibt sich somit ein für die Datenübertragung sehr günstiges Verhältnis aus Nutzsignal und Störung. Dies ermöglicht Reichweiten, die teilweise denen mit kapazitiven Einkopplungen erreichten, überlegen sind. Bei einem Abstand von ca. 450 m zwischen zwei Trafostationen kann dadurch noch ein Signal/Rauschverhältnis von annähernd 60 dB erreicht werden, so dass insgesamt eine Übertragung über eine Strecke von mehreren Kilometern und mehrere Trafostationen hinweg noch möglich ist.

In Weiterbildung der Erfindung ist, gemäß Patentanspruch 3, die induktive Koppeleinheit in einer Trafostation angeordnet und der Ring ist als Ringkern oder als Kunststoffring mit umwickelter Spule ausgestaltet.

Diese Weiterbildung der Erfindung weist den Vorteil auf, dass ein Schutzgehäuse für die induktive Koppeleinheit nicht erforderlich ist und dass diese ohne Luftspalt montiert werden kann. Prinzipiell kann jedoch jede geometrische Form gewählt werden, die geschlossen ist und somit eine Fläche definiert (z.B. Quadrat), es ist auch möglich eine Luftspule einzusetzen.

In Netzwerken, wo sowohl Freileitungen als auch Erdkabel verwendet werden, sind die Trafostationen oft auch über Erdkabel angebunden. Da der Strom direkt in den Leiter eingekoppelt wird, kann dieses System auch für diese Netzwerke verwendet werden. Bei kurzen Strecken zwischen der Freiluftleitung und der Trafostation werden meistens drei Erdkabel mit je einem Leiter und Schirm verwendet. Hierbei sind, gemäß einer bevorzugten Ausgestaltung der Erfindung nach Patentanspruch 4, bei einer Übertragungstrecke mit mehreren Erdkabeln alle induktiven Koppeleinheiten in dieselbe Phase eingeschleift. In Weiterbildung hierzu ist, gemäß Patentanspruch 5, die induktive Koppeleinheit über alle Phasen eingeschleift.

Die Ausgestaltung nach Patentanspruch 4 bzw. Weiterbildung nach Patentanspruch 5 weist den Vorteil auf, dass auch eine gemischte Installation über eine und alle drei Phasen mit geringen Verlusten möglich ist.

In einer Weiterbildung ist, gemäß Patentanspruch 6, die induktive Koppeleinheit in die Zuleitung zum Transformator eingeschleift.

Dadurch kann die erfindungsgemäße induktive Koppeleinheit auch bei Trafostationen eingesetzt werden, bei denen eine Installation der induktiven Ein-/ Auskopplung in die zu- und abgehende Leitung nicht möglich ist; z.B. Freiluftleitung und offener Aufbau in der Trafostation.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:
FIG. 1 in Draufsicht eine erste Ausgestaltung,
FIG. 2 in Draufsicht eine zweite Ausgestaltung und
FIG. 3 die Anordnung der erfindungsgemäßen induktiven Koppelschaltung zur Nachrichtenübertragung in elektrischen Energieverteilnetzen.

Die in FIG. 1 und FIG. 2 dargestellten Ausführungsformen der erfindungsgemäßen induktiven Koppelschaltung dienen vorzugsweise zur Nachrichtenübertragung in elektrischen Energieverteilnetzen, insbesondere in Mittel- oder Hochspannungsanlagen. Weiterhin kann diese bei fast allen Kabeltypen und Anwendungen eingesetzt werden, beispielsweise auch bei, Pipelines (hier dient das Metallrohr quasi als Schirm und das Medium als Leiter) oder bei Energiekabeln zur Gleichstromübertragung. Vorzugsweise besteht die induktive Koppelschaltung aus einer induktiven Koppeleinheit AE und einem Ableiter A1 (siehe FIG. 1) bzw. A (siehe FIG. 2 und FIG. 3). Die induktive Koppeleinheit AE weist einen das geschirmte Energiekabel K umschließenden Ring R und eine mit dem Ring R induktiv gekoppelte Spule SP, welche mit einer Sende-/Empfangeinrichtung SE verbunden ist, auf.

Bei der in FIG. 1 dargestellten Ausgestaltung der erfindungsgemäßen induktiven Koppelschaltung ist der Ableiter A1 der induktiven Koppeleinheit AE nachgeordnet und vor der aufgespannten Fläche befindlich sowie mit dem Schirm S und Erde E oder Ausgleichspotential verbunden (d.h. der abisolierte Schirm S ist direkt mit der Erdungsschiene E verbunden). Infolgedessen resultiert im Schirm S kein Stromfluss, da von der einen Seite der für die induktive Einkopplung aufgespannten Fläche keine leitende Verbindung zu der anderen Seite besteht, als die durch die Fläche selbst. Dadurch wird beim Senden der Strom des Nachrichtensignals direkt in den Leiter induziert (und nicht in den Schirm wie beim Stand der Technik; siehe beispielsweise Gerätehandbuch DCS3000 der Fa. Siemens AG) bzw. dem zugehörigen DE 93 15 875 U und beim Empfangen wird nur der Strom im Leiter ausgewertet.

Bei der in FIG. 2 bzw. FIG. 3 dargestellten Ausführungsform der erfindungsgemäßen induktiven Koppelschaltung ist der Leitungsweg des mit dem Schirm S und Erde E oder Ausgleichspotential verbundenen Ableiters A durch den Ringkern R zurückgeführt. Dabei fließen durch die von der induktiven Koppeleinheit AE aufgespannten Fläche:
- der Strom des überlagerten Nachrichtensignals im Leiter des Energiekabels K,
- der Gegenstrom und/oder induzierte Störungen auf dem Schirm S und
- der identische Gegenstrom und/oder induzierte Störungen in entgegengesetzter Richtung im Ableiter A.

Infolgedessen kompensiert sich das Magnetfeld der beiden zuletzt genannten Ströme und die induktive Koppeleinheit AE induziert beim Senden den Strom des Nachrichtensignals direkt in den Leiter und wertet beim Empfangen nur den Strom im Leiter aus. Dabei wird vorzugsweise der Ableiter A möglichst nahe und parallel am Schirm zurückgeführt, wodurch der Kompensationseffekt vergrößert werden kann.

Vorzugsweise ist die induktive Koppeleinheit AE in einer Trafostation angeordnet, der Ring R ist als Ringkern oder als Kunststoffring mit umwickelter Spule ausgestaltet und die induktive Koppeleinheit AE ist über alle Phasen eingeschleift. Bei einer Übertragungstrecke mit mehreren Erdkabeln sind alle induktive Koppeleinheiten AE in dieselbe Phase eingeschleift; auch das Einschleifen der induktiven Koppeleinheit AE in die Zuleitung zum Transformator T ist möglich. Die in der FIG. 3 ebenfalls dargestellten hellgrau hinterlegten und keine Bezugszeichen aufweisenden Ringkerne zeigen die pro Kabelabschnitt doppelt erforderliche Anordnung der induktive Koppelschaltung beim Stand der Technik (siehe beispielsweise Gerätehandbuch DCS3000 der Fa. Siemens AG_bzw. dem zugehörigen DE 93 15 875 U) auf.

Die erfindungsgemäße induktive Koppelschaltung findet überall dort Anwendung, wo hohe Ansprüche an Echtzeitfähigkeit und Sicherheitsanforderungen gestellt werden und ein Höchstmaß an effizienter und sicherer Datenübertragung oder hohen Reichweiten mit wenigen Sende-/Empfangseinheiten erreicht werden soll, beispielsweise im Bergbau, in Mittel- oder Hochspannungsanlagen oder in der industriellen Elektronik, insbesondere der Automatisierungstechnik.

In Weiterentwicklung der Erfindung kann die erfindungsgemäße induktive Koppelschaltung im Rahmen einer Echtzeitvernetzung von Steuerungen (auch Echtzeitsteuerung mit gemischten Betrieb über Ethernet und Powerline) eingesetzt werden, wo die Synchronisierbarkeit der Teilnehmer (beispielsweise Antriebe, schnelle E/As, Sensoren, Aktoren, Vision-Systeme) untereinander und die Verarbeitung der Daten im Regeltakt der Antriebe Voraussetzung ist; die induktive Koppelschaltung kann in Verteilerkästen angeordnet werden; u.a..

## Patentansprüche

1. Induktive Koppelschaltung zur Nachrichtenübertragung in elektrischen Energieverteilnetzen, welche in der Übertragungsstrecke angeordnet ist und welche eine induktive Koppeleinheit (AE), bestehend aus einem das geschirmte Energiekabel (K) umschließenden Ring (R) und einer mit dem Ring (R) induktiv gekoppelten Spule (SP), welche mit einer Sende-/Empfangseinrichtung (SE) verbunden ist, und einen mit dem Schirm (S) und Erde (E) oder Ausgleichspotential verbundenen Ableiter (A1) aufweist, **dadurch gekennzeichnet, dass** der Ableiter (A1) der induktiven Koppeleinheit (AE) nachgeordnet ist und dass die Koppelschaltung am Ende des Energiekabels (K) angebracht ist, wobei die induktive Koppeleinheit (AE) näher am Kabelende angeordnet ist als der Ableiter (A1), wodurch der Strom des überlagerten Nachrichtensignals im Leiter des Energiekabels (K) fließt und wodurch im Schirm (S) kein Stromfluss resultiert.

2. Induktive Koppelschaltung zur Nachrichtenübertragung in elektrischen Energieverteilnetzen, welche in der Übertragungsstrecke angeordnet ist, welche eine induktive Koppeleinheit (AE), bestehend aus einem das geschirmte Energiekabel (K) umschließenden Ring (R) und einer mit dem Ring(R) induktiv gekoppelten Spule (SP), welche mit einer Sende-/Empfangeinrichtung (SE) verbunden ist und welche einen mit dem Schirm (S) und Erde (E) oder Ausgleichspotential verbundenen Ableiter (A), dessen Leitungsweg durch den Ringkern (R) zurückgeführt ist, aufweist, wobei die induktive Koppeleinheit (AE) beim Senden den Strom des Nachrichtensignals direkt in den Leiter induziert und beim Empfangen nur den Strom im Leiter auswertet, **dadurch gekennzeichnet, dass** die induktive Koppeleinheit (AE) in einer Trafostation angeordnet ist, dass der Ring (R) als Ringkern oder als Kunststoffring mit umwickelter Spule ausgestaltet ist, dass die induktive Koppeleinheit (AE) über alle Phasen eingeschleift ist und dass der Leitungsweg so durch den Ringkern (R) zurückgeführt ist, dass beim Durchqueren des Ringkerns (R) der Strom durch den Schirm (S) in entgegengesetzter Richtung zu dem Strom im Leitungsweg des Ableiters (A) fließt.

3. Induktive Koppelschaltung nach Anspruch 1, **dadurch gekennzeichnet, dass** die induktive Koppeleinheit (AE) in einer Trafostation angeordnet ist und dass der Ring (R) als Ringkern oder als Kunststoffring mit umwickelter Spule ausgestaltet ist.

4. Induktive Koppelschaltung nach Anspruch 1 oder 2, **dadurch gekennzeichnet, dass** bei einer Übertragungstrecke mit mehreren Erdkabeln alle induktive Koppeleinheiten (AE) in dieselbe Phase eingeschleift sind.

5. Induktive Koppelschaltung nach Anspruch 1, **dadurch gekennzeichnet, dass** die induktive Koppeleinheit (AE) über alle Phasen eingeschleift ist.

6. Induktive Koppelschaltung nach Anspruch 1 oder 2, **dadurch gekennzeichnet, dass** bei einer Anordnung der induktiven Koppeleinheit (AE) in einer Trafostation, die induktive Koppeleinheit (AE) in die Zuleitung zum Transformator (T) eingeschleift ist.

7. Verfahren zur Nachrichtenübertragung in elektrischen Energieverteilnetzen mit geschirmten Energiekabeln (K) und mit einer daran angeordneten induktiven Koppelschaltung mit Koppeleinheit (AE), bestehend aus einem das geschirmte Energiekabel (K) umschließenden Ring (R) und einer mit dem Ring (R) induktiv gekoppelten Spule (SP), welche mit einer Sende-/Empfangseinrichtung (SE) verbunden ist, und mit einem mit dem Schirm (S) und Erde (E) oder Ausgleichspotential verbundenen Ableiter (A1), **dadurch gekennzeichnet, dass** der Ableiter (A1) der induktiven Koppeleinheit (AE) nachgeordnet ist, indem die Koppelschaltung am Ende des Energiekabels (K) angebracht ist und die induktive Koppeleinheit (AE) näher am Kabelende angeordnet ist als der Ableiter (A1) und dass die induktive EinundAuskopplung des Nachrichtensignals durch die von der induktiven Koppeleinheit (AE) aufgespannten Fläche derart erfolgt, dass im Schirm (S) kein Stromfluss resultiert, so dass von der einen Seite der für die induktive Einkopplung aufgespannten Fläche keine leitende Verbindung zu der anderen Seite besteht, als die durch die Fläche selbst und beim Senden der Strom des Nachrichtensignals direkt in den Leiter induziert und beim Empfangen nur der Strom im Leiter ausgewertet wird.

8. Verfahren zur Nachrichtenübertragung in elektrischen Energieverteilnetzen mit geschirmten Energiekabeln (K) und mit einer daran angeordneten induktiven Koppelschaltung mit einer induktiven Koppeleinheit (AE), bestehend aus einem das geschirmte Energiekabel (K) umschließenden Ring (R) und einer mit dem Ring (R) induktiv gekoppelten Spule (SP), welche mit einer Sende-/Empfangseinrichtung (SE) verbunden ist und mit einem mit dem Schirm (S) und Erde (E) oder Ausgleichspotential verbundenen Ableiter (A), dessen Leitungsweg durch den Ringkern (R) zurückgeführt ist, **dadurch gekennzeichnet, dass** die induktive Ein- und Auskopplung des Nachrichtensignals mittels der in einer Trafostation angeordneten induktiven Koppeleinheit (AE), welche näher am Kabelende angeordnet ist als der Ableiter (A1), über alle Phasen derart erfolgt, dass durch die von der induktiven Koppeleinheit (AE) der Koppelschaltung aufgespannten Fläche, das überlagerte Nutzsignal in den Leitern des Energiekabels (K), der Gegenstrom und/oder induzierte Störungen auf dem Schirm (S) und der identische Gegenstrom und/oder induzierte Störungen in entgegengesetzter Richtung fließen, wobei der Leitungsweg so durch den Ringkern (R) oder durch einen Kunststoffring mit umwickelter Spule zurückgeführt ist, dass beim Durchqueren des Ringkerns (R) oder des Kunststoffrings der Strom durch den Schirm (S) in entgegengesetzter Richtung zu dem Strom im Leitungsweg des Ableiters (A) fließt, wodurch sich das Magnetfeld der beiden zuletzt genannten Ströme kompensiert und die induktive Koppeleinheit (AE) beim Senden den Strom des Nachrichtensignals direkt in die Leiter induziert und beim Empfangen nur den Strom in den Leitern auswertet.

## Claims

1. An inductive coupling circuit for information signal transmission in electric energy distribution grids and disposed within a transmission path and which comprises: an inductive coupling unit (AE) having a ring (R) that encloses a shielded power cable (K) and a ring coil (SP), which is connected to a transmitting / receiving device (SE) and inductively coupled to the ring (R), and an arrester (A1) connected to ground (E) or compensating potential, **characterized in that** the arrester (A1) is disposed upstream of said inductive coupling unit (AE) and that said inductive coupling circuit is attached at the end of said power cable (K) wherein said inductive coupling unit (AE) is arranged closer at the end of said power cable (K) than said arrester (A1), whereby a current of a superposed information signal flows in a conductor of said power cable (K) and whereby no current flows in said shield (S).

2. An inductive coupling circuit for information signal transmission in electric energy distribution grids and disposed within a transmission path and which comprises: an inductive coupling unit (AE) having a ring (R) that encloses a shielded power cable (K) and a ring coil (SP), which is connected to a transmitting / receiving device (SE) and inductively coupled to the ring (R), and an arrester (A1) connected to said shield (S) and ground (E) or compensating potential, the wire path of said arrester (A1) is leaded back through said ring (R), such that the inductive coupling unit (AE) induces the current of said information signal directly into said conductor during transmission and evaluates only the current in the conductor during reception, **characterized in that** said inductive coupling device (AE) is located in a transformer station and said ring (R) is a ring core or a plastic ring with a wrapped coil, that said inductive coupling unit (AE) is looped in all current phases and that the wire path is such leaded back that crossing the ring core of the ring (R) the current through said shield (S) flows in opposite direction to the current in the wire path of said arrester (A).

3. Inductive coupling circuit according to claim 1, **characterized in that** said inductive coupling device (AE) is located in a transformer station and said ring (R) is a ring core or a plastic ring with a wrapped coil.

4. Inductive coupling circuit according to claim 1 or 2, **characterized in that** in a transmission path with multiple ground cables all inductive coupling units (AE) are looped into the same phase.

5. Inductive coupling circuit according to claim 1, **characterized in that** the inductive coupling unit (AE) is looped into all phases.

6. Inductive coupling circuit according to claim 1 or 2, **characterized in that** by locating said inductive coupling unit (AE) in a transformer station, said inductive coupling unit (AE) is looped into the supply line to the transformer (T).

7. A method for information signal transmission in electric energy distribution grids having shielded power cables (K) and mounted to these an inductive coupling circuit having an inductive coupling unit (AE) comprising a ring (R) that encloses said shielded power cable (K) and a ring coil (SP), which is connected to a transmitting / receiving device (SE) and inductively coupled to the ring (R), and an arrester (A1) connected to ground (E) or compensating potential, **characterized in that** the arrester (A1) is disposed upstream of said inductive coupling unit (AE), wherein said inductive coupling circuit is arranged at the end of said power cable (K) and said inductive coupling unit (AE) is arranged closer at the end of said power cable (K) than said arrester (A1), and that the inductive coupling and uncoupling of the information signal by the inductive coupling unit (AE) spanned area is such that in shield (S) results no current flow, so that there is no conductive connection to the other side of one side of the inductive coupling surface than that induced by the surface itself and during transmission the current of the information signal is directly induced into the conductor and during reception only the current in the conductor is evaluated.

8. A method for information signal transmission in electric energy distribution grids having shielded power cables (K) and mounted to these an inductive coupling circuit having an inductive coupling unit (AE) comprising a ring (R) that encloses said shielded power cable (K) and a ring coil (SP), which is connected to a transmitting / receiving device (SE) and inductively coupled to the ring (R), and an arrester (A1) connected to said shield (S) and ground (E) or compensating potential, **characterized in that** for all phases the inductive coupling and uncoupling of the information signal takes place by an inductive coupling unit (AE), which is located in a transformer station and is arranged closer at the end of said power cable (K) than said arrester (A1) and such that through a plane defined by said inductive coupling device (AE) of said inductive coupling circuit, a current of a superposed information signal in the conductor of the power cable (K), a return current and/or induced interference signals on the shield as well as an identical return current and/or induced interference signals flow through said plane in opposite directions, wherein the wire path is such leaded back through the ring core (R) or a plastic ring with a wrapped coil, that crossing the ring core of the ring (R) the current through said shield (S) flows in opposite direction to the current in the wire path of said arrester (A) whereby the magnetic fields of the last referenced currents are compensated and by said inductive coupling unit (AE) the current of the information signal is directly induced into the conductor during transmission and only the current in the conductor is evaluated during reception.

## Revendications

1. Un circuit de couplage inductif pour la transmission de messages dans les réseaux de distribution d'énergie électrique, étant disposé d'une trajet de transmission et qui comprend: une unité de couplage inductif (AE) constituée d'un câble d'alimentation blindé (K) renfermant par un l'anneau (R), qui étant couplée par induction à une bobine (SP), et qui est connectée avec un dispositif émetteur / récepteur (SE) et avec un parafoudre (A1) relié à la grille (S) et à la masse (E) ou à un potentiel de compensation, **caractérisé en ce que** le parafoudre (A1) est disposé en aval du couplage inductif (AE) et que le circuit de couplage est disposé à l'extrémité du câble d'alimentation (K), à condition que le couplage inductif (AE) est disposé plus près d'extrémité du câble comme le parafoudre (A1), de sorte que le courant du signal de message superposé circule dans le conducteur et de sorte qu'aucun courant circule dans la grille (S).

2. Un circuit de couplage inductif pour la transmission de messages dans les réseaux de distribution d'énergie électrique, étant disposé d'une trajet de transmission et qui comprend: une unité de couplage inductif (AE) constituée d'un câble d'alimentation blindé (K) renfermant par un 'anneau (R), qui étant couplée par induction à une bobine (SP), et qui est connectée avec un dispositif émetteur / récepteur (SE) et avec un parafoudre (A1) relié au un blindage(S) et à la masse (E) ou à un potentiel de compensation, le trajet conducteur du parafoudre (A1) est retourné par un noyau annulaire (R), à condition que le couplage inductif (AE) induit le courant du signal de message directement dans le conducteur pendant la transmission et évalue uniquement le courant dans le conducteur lors de la réception, **caractérisé en ce que** l'unité de couplage inductif (AE) est disposée dans un poste de transformation, que l'anneau (R) est conçu comme noyau annulaire ou comme anneau en plastique avec une bobine enroulée, que l'unité de couplage inductif (AE) est insérée dans tous les phases et que le trajet conducteur est retourné par le noyau annulaire (R) tel que en traversant le noyau annulaire (R) le courant circule dans le blindage (S) en sens contraire du courant circule dans trajet conducteur du parafoudre (A1).

3. Circuit de couplage inductif selon la revendication 1, **caractérisé en ce que** l'unité de couplage inductif (AE) est disposée dans un poste de transformation, et que l'anneau (R) est conçu comme noyau annulaire ou comme anneau en plastique avec une bobine enroulée.

4. Circuit de couplage inductif selon la revendication 1 ou 2, **caractérisé en ce que** toutes les unités de couplage inductives (AE) sont insérées dans la même phase dans une voie de transmission avec plusieurs câbles de masse.

5. Circuit de couplage inductif selon la revendication 1, **caractérisé en ce que** l'unité de couplage inductif (AE) est insérée dans tous les phases.

6. Circuit de couplage inductif selon la revendication 1 ou 2, **caractérisé en ce que** l'unité de couplage inductif (AE) est disposée dans un poste de transformation, l'unité de couplage inductif (AE) est inséré dans la ligne d'alimentation vers le transformateur (T).

7. Procédé pour la transmission de messages dans des réseaux de distribution d'énergie électrique avec des câbles d'alimentation blindés (K) et disposé sur celles un circuit de couplage inductif avec l'unité de couplage inductif (AE) et qui comprend: un câble d'alimentation blindé (K) renfermant par un l'anneau (R), qui étant couplée par induction à une bobine (SP), et qui est connectée avec un dispositif émetteur / récepteur (SE), et avec un parafoudre (A1) relié à la masse (E) ou à un potentiel de compensation, **caractérisé en ce que** le parafoudre (A1) est disposé en aval du couplage inductif (AE) et que le circuit de couplage est disposé à l'extrémité du câble d'alimentation (K), et que l'unité de couplage inductif (AE) est disposée plus proche de l'extrémité du câble que de parafoudre (A1) et que le couplage inductif et le découplage du signal de message par l'unité de couplage inductif (AE) est tel que dans le blindage (S) n'entraîne aucun écoulement de courant, de sorte qu'il n'y a pas de connexion conductrice de l'autre côté de la surface de couplage inductive que celle induite par la surface elle-même et que pour envoyer le courant du signal de message est induit directement au conducteur et pour la réception au seule du courant dans le conducteur est évaluée.

8. Procédé pour la transmission de messages dans des réseaux de distribution d'énergie électrique avec des câbles d'alimentation blindés (K) et disposé sur celles un circuit de couplage inductif avec l'unité de couplage inductif (AE) et qui comprend: un câble d'alimentation blindé (K) renfermant par un l'anneau (R), qui étant couplée par induction à une bobine (SP), et qui est connectée avec un dispositif émetteur / récepteur (SE), et avec un parafoudre (A1) relié à un blindage (S)et la masse (E) ou à un potentiel de compensation, le trajet conducteur du parafoudre (A1) est retourné par le noyau annulaire (R), **caractérisé en ce que** le couplage inductif et le découplage du signal de message par l'unité de couplage inductif (AE), qui est disposée dans un poste de transformation et plus proche de l'extrémité du câble que de parafoudre (A1) est fait par tous les phases de sorte que la zone définie par le circuit de couplage du l'unité de couplage inductif (AE) le signal utile superposé dans le conducteur du câble d'alimentation (K), les perturbations à contre-courant et / ou induites sur le blindage (S) et les perturbations identiques à contre-courant et / ou induites circulent dans des sens opposés, tel que le trajet conducteur est retourné par le noyau annulaire (R) ou par un anneau en plastique avec une bobine enroulée que en traversant le noyau annulaire (R) ou l'anneau en plastique le courant à travers le blindage (S) circule en sens contraire du courant dans le trajet conducteur du parafoudre (A1) et tel que le champ magnétique des deux derniers courants étant compensé et l'unité de couplage inductif (AE) induit le courant du signal de message directement dans le conducteur pendant la transmission et évalue uniquement le courant dans le conducteur pendant la réception.
